# FASCICULE DE BREVET EUROPEEN

(11) **EP 4 067 125 B1**
(45) Date de publication et mention de la délivrance du brevet: **28.02.2024**
(21) Numéro de dépôt: 22160603.1
(22) Date de dépôt: 07.03.2022
(51) Int. Cl.: B60G 15/06, B60G 21/055, F16B 2/10, F16B 7/04

(54) **ÉLÉMENT DE SUSPENSION D'UN VÉHICULE**
AUFHÄNGUNGSELEMENT EINES FAHRZEUGS
SUSPENSION ELEMENT OF A VEHICLE

(30) Priorité: 30.03.2021 FR 2103288
(43) Date de publication de la demande: 05.10.2022
(73) Titulaire: Renault s.a.s, 92100 Boulogne Billancourt (FR)
(72) Inventeur: BOURDIER, Céline, 72000 LE MANS (FR); CUBAUD, Olivier, 78084 GUYANCOURT (FR); PEREZ, Jean-Michel, 78084 GUYANCOURT (FR)
(74) Mandataire: Renault Group

(56) Documents cités:
- EP-A1- 2 397 349
- DE-A1-102016 204 715
- DE-A1-102019 113 439
- JP-A- 2002 257 106
- KR-U- 20130 002 060
- TW-A- 200 925 455
- US-A1- 2011 085 848
- US-A1- 2015 240 846

## Description

### Domaine technique de l'invention

La présente invention concerne un dispositif de maintien d'une biellette de barre stabilisatrice à un amortisseur de l'élément de suspension d'un véhicule automobile.

L'invention concerne plus particulièrement une bague de maintien d'une biellette de barre stabilisatrice à un corps d'amortisseur.

### Arrière-plan technique

Classiquement, l'élément de suspension d'un véhicule automobile est configuré pour absorber l'impact des chocs que peuvent rencontrer les roues d'un véhicule automobile. L'élément de suspension participe également à la bonne tenue de route du véhicule, ainsi qu'au confort de conduite. L'élément de suspension est l'association d'une barre stabilisatrice, d'une biellette de barre stabilisatrice et d'un amortisseur.

Les barres stabilisatrices, ou barres anti-roulis, ou encore barres anti-dévers, assurent la bonne tenue de route du véhicule dans toutes les situations de roulage du véhicule et plus particulièrement dans un virage, sur un terrain irrégulier ou bien sur une chaussée déformée.

Un véhicule comporte une barre stabilisatrice reliée aux roues avant et une barre stabilisatrice reliée aux arrières. Lorsqu'un véhicule effectue un virage courbé à une vitesse assez importante, les roues situées à l'extérieur du virage sont soumises à une pression plus importante que les roues situées à l'intérieur du virage ce qui provoque la diminution de l'adhérence au sol des roues à l'intérieur du virage. Cependant, les barres stabilisatrices permettent de limiter le tangage du véhicule et ainsi maintenir une pression équilibrée entre les roues à l'extérieur et à intérieur du virage.

Une biellette de barre stabilisatrice relie la carrosserie au châssis du véhicule. Une première extrémité de la biellette de barre stabilisatrice est fixée de manière pivotante au corps d'amortisseur au moyen d'un dispositif de maintien et une deuxième extrémité est fixée de manière pivotante à la barre stabilisatrice au moyen d'une liaison rotule. La biellette de barre stabilisatrice assure une liaison permanente entre la barre stabilisatrice et l'amortisseur dans toutes les situations de roulage du véhicule.

Il existe différents types de dispositifs de fixation d'une biellette de barre stabilisatrice à un corps d'amortisseur de l'élément de suspension d'un véhicule automobile.

Selon un exemple, le dispositif de maintien est une bride de fixation symétrique qui est soudée à une extrémité sur un corps d'amortisseur cylindrique et qui est reliée à l'autre extrémité à la biellette de barre stabilisatrice. Le dispositif de maintien est une pièce symétrique comportant deux points de fixation du dispositif de maintien sur le corps d'amortisseur. Le dispositif de maintien est donc une pièce identique pour les amortisseurs droit et gauche du véhicule, une simple rotation du dispositif de maintien permet de l'adapter à chaque amortisseur.

Selon un autre exemple, le dispositif de maintien est une pièce différente pour les amortisseurs droit et gauche du véhicule, ce qui nécessite deux références distinctes.

Or, le fait d'avoir une unique référence de dispositif de maintien de la biellette de barre stabilisatrice facilite le procédé de montage de l'élément de suspension du véhicule et limite fortement les erreurs de montage. L'assemblage du dispositif de maintien avec le corps d'amortisseur par soudage permet d'obtenir un assemblage solidaire sans aucun débattement possible entre la biellette de barre stabilisatrice et le corps d'amortisseur lors de la sollicitation de l'élément de suspension du véhicule.

Cependant, l'assemblage par soudure présente certains inconvénients. En effet, ce type d'assemblage est non démontable et implique des contraintes dimensionnelles à respecter sur les pièces à souder pour obtenir une soudure conforme. Par conséquent, l'épaisseur du corps d'amortisseur doit être suffisamment importante par rapport à l'épaisseur du dispositif de maintien de la biellette de barre stabilisatrice.

Le document EP 2397349 propose un dispositif de maintien d'une biellette de barre stabilisatrice à un corps d'amortisseur se présentant sous la forme d'une bague de maintien composée de deux parties distinctes assemblées l'une par rapport à l'autre par un moyen de fixation de type vis-écrou. Un tel dispositif de maintien est démontable. Cependant, un élément en caoutchouc est interposé entre la bague de maintien et le corps d'amortisseur ce qui rend possible la rotation de la bague de maintien par rapport au corps d'amortisseur. Or, il est primordial d'obtenir un assemblage solidaire de la biellette de barre stabilisatrice avec le corps d'amortisseur.

De plus, le procédé de montage d'une telle bague de maintien est complexe car il requiert la fixation de chacune des deux parties de la bague de maintien l'une après l'autre.

Le document DE 1 02019113439A1 divulguant un élément de suspension selon le préambule de la revendication 1 et le document DE102016204715A1 décrivent le montage d'une biellette de barre stabilisatrice sur un corps d'amortisseur faisant intervenir de nombreuses pièces supplémentaires. Les documents US20150240846A1, KR2020130002060U ou JP2002257106A concernent des éléments de maintien annulaires. L'invention propose notamment de remédier aux inconvénients mentionnés grâce à une bague de maintien d'une biellette de barre stabilisatrice à un corps d'amortisseur étant à la fois une pièce démontable et unique pour les amortisseurs droit et gauche du véhicule, tout en garantissant un assemblage solidaire de la biellette de barre stabilisatrice avec le corps d'amortisseur.

### Résumé de l'invention

L'invention propose une bague de maintien d'une biellette de barre stabilisatrice à un corps d'amortisseur d'un élément de suspension d'un véhicule automobile, la bague de maintien s'étendant selon un axe principal et comprenant deux brides prévues pour être en appui contre le corps d'amortisseur, chaque bride comporte un premier et un deuxième tronçons d'extrémité.

La bague de maintien comporte :
- un moyen de fixation des deux brides de la bague de maintien l'une par rapport à l'autre à leur premier tronçon d'extrémité et un moyen d'articulation des deux brides l'une par rapport à l'autre à leur deuxième tronçon d'extrémité, et
- au moins un dispositif de blocage en rotation de la bague de maintien par rapport au corps d'amortisseur.

Selon d'autres caractéristiques de la bague de maintien :
- au moins l'une des deux brides de la bague de maintien comporte une nervure de blocage en rotation de la bague de maintien par rapport au corps d'amortisseur formée sur une surface interne de la bride, et la nervure est ape à être reçue dans le corps d'amortisseur ;
- le moyen d'articulation de la bague de maintien constitue un dispositif de blocage en rotation de la bague de maintien par rapport à la portion cylindrique de l'amortisseur ;
- le moyen d'articulation de la bague de maintien comporte un axe cylindrique maintenu par chaque deuxième tronçon d'extrémité des brides de la bague de maintien ; et
- le moyen d'articulation de la bague de maintien comporte une ouverture agencée sur le deuxième tronçon d'extrémité d'une bride qui est prévue pour recevoir le deuxième tronçon d'extrémité de l'autre bride de la bague de maintien.

L'invention propose aussi un élément de suspension d'un véhicule automobile comportant un corps d'amortisseur. L'élément de suspension comporte une bague de maintien selon l'invention, et le corps d'amortisseur comporte un dispositif de blocage en rotation complémentaire du dispositif de blocage en rotation de la bague de maintien par rapport au corps d'amortisseur.

Selon d'autres caractéristiques de l'élément de suspension :
- en position montée de la bague de maintien sur le corps d'amortisseur, la nervure de la bride de la bague de maintien est reçue dans une rainure de blocage du corps d'amortisseur ;
- en position montée de la bague de maintien sur le corps d'amortisseur, l'axe cylindrique du moyen d'articulation de la bague de maintien est reçu dans une rainure de blocage formée sur une surface externe du corps d'amortisseur ;
- le corps d'amortisseur comporte un dispositif de retenue axiale de la bague de maintien par rapport au corps d'amortisseur ;
- le corps d'amortisseur comporte deux bourrelets parallèles formés sur une surface externe du corps d'amortisseur et s'étendant selon une direction perpendiculaire à l'axe principal, et en position montée de la bague de maintien sur le corps d'amortisseur, la bague de maintien est retenue axialement entre les deux bourrelets du corps d'amortisseur.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] - la figure 1 est une vue en perspective d'un premier mode de réalisation d'un élément de suspension d'un véhicule automobile comportant un corps d'amortisseur et une bague de maintien d'une biellette de barre stabilisatrice au corps d'amortisseur selon l'invention ;
[Fig.2] - la figure 2 est une vue en perspective complémentaire du premier mode de réalisation de l'élément de suspension de la figure 1 ;
[Fig.3] - la figure 3 est une vue en perspective d'un deuxième mode de réalisation d'un élément de suspension comportant un corps d'amortisseur et une bague de maintien d'une biellette de barre stabilisatrice au corps d'amortisseur selon l'invention ;
[Fig.4] - la figure 4 est une vue en perspective complémentaire du deuxième mode de réalisation de l'élément de suspension de la figure 3.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal. L'axe longitudinal L est orienté de la droite vers la gauche de la bague de maintien et plus particulièrement d'un premier tronçon d'extrémité vers un deuxième tronçon d'extrémité d'une bride de la bague de maintien.

Dans la description qui va suivre, des éléments identiques, similaires ou analogues seront désignés par les mêmes références alphanumériques.

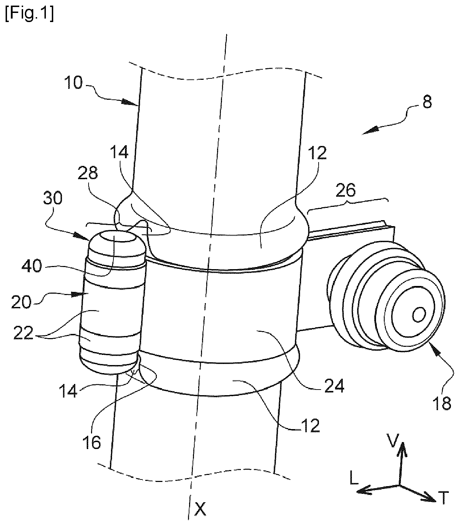

Les figures 1 à 4 représentent un élément de suspension 8 d'un véhicule automobile comportant un corps d'amortisseur 10 et une bague de maintien 20 d'une biellette de barre stabilisatrice au corps d'amortisseur 10 constituant le dispositif de maintien.

La bague de maintien 20 de l'élément de suspension 8 s'étend selon un axe principal X suivant la direction de l'axe vertical V du repère V, L, T.

La bague de maintien 20 comporte :
- deux brides 22 (appelés aussi étriers) prévues pour être en appui contre le corps d'amortisseur 10 cylindrique,
- un moyen de fixation 32 des deux brides 22 l'une par rapport à l'autre à une extrémité,
- un moyen d'articulation 30 des deux brides 22 l'une par rapport à l'autre à une autre extrémité, et
- au moins un dispositif de blocage en rotation de la bague de maintien 20 par rapport au corps d'amortisseur 10.

Chaque bride 22 de la bague de maintien 20 est une plaque métallique comportant un tronçon central 24 et un premier et un deuxième tronçons d'extrémité 26, 28 agencés latéralement de part et d'autre du tronçon central 24.

Le tronçon central 24 a la forme d'un demi-cercle prévu pour venir épouser la forme tubulaire du corps d'amortisseur 10. Le premier tronçon d'extrémité 26 est plat et sensiblement rectangulaire. Un trou taraudé est agencé dans le premier tronçon d'extrémité 26 pour recevoir le moyen de fixation 32 des deux brides 22 de type vis-écrou.

Chaque bride 22 est par exemple réalisée par un procédé d'emboutissage et de cintrage d'une feuille de métal.

Le corps d'amortisseur 10 de l'élément de suspension 8 est une pièce métallique tubulaire qui s'étend selon l'axe principal X et qui est défini dimensionnellement par une longueur et une épaisseur. Le corps d'amortisseur 10 comporte :
- un dispositif de blocage en rotation complémentaire du dispositif de blocage en rotation de la bague de maintien 20 par rapport au corps d'amortisseur 10, et
- un dispositif de retenue axiale de la bague de maintien 20 par rapport au corps d'amortisseur 10.

Avantageusement, le dispositif de retenue axiale du corps d'amortisseur 10 comporte deux bourrelets 12 (appelés aussi épaulements) parallèles formés sur une surface externe du corps d'amortisseur 10 et s'étendant selon une direction perpendiculaire à l'axe principal X, sur toute la circonférence du corps d'amortisseur 10.

Chaque bourrelet 12 du corps d'amortisseur 10 est par exemple réalisé par emboutissage lent.

En position montée de la bague de maintien 20 sur le corps d'amortisseur 10 :
- la surface interne du tronçon central 24 de chaque bride 22 est en appui contre le corps d'amortisseur 10 cylindrique,
- la surface interne du premier tronçon d'extrémité 26 de chaque bride 22 est en contact l'une contre l'autre et les premiers tronçons d'extrémité 26 sont reliés par le moyen de fixation 32,
- les deuxièmes tronçons d'extrémité 28 des brides 22 forment le moyen d'articulation 30 de sorte que les deux brides 22 de la bague de maintien 20 sont articulées l'une par rapport à l'autre selon un axe d'articulation parallèle à l'axe principal X de la bague de maintien 20,
- le moyen de fixation 32 est couplé à une liaison rotule 18 de la biellette de barre stabilisatrice pour assurer un assemblage solidaire de la biellette de barre stabilisatrice avec le corps d'amortisseur 10,
- chaque dispositif de blocage en rotation de la bague de maintien 20 est reçu dans un dispositif de blocage complémentaire du corps d'amortisseur 10, et
- la bague de maintien 20 est retenue axialement entre les deux bourrelets 12 du corps d'amortisseur 10.

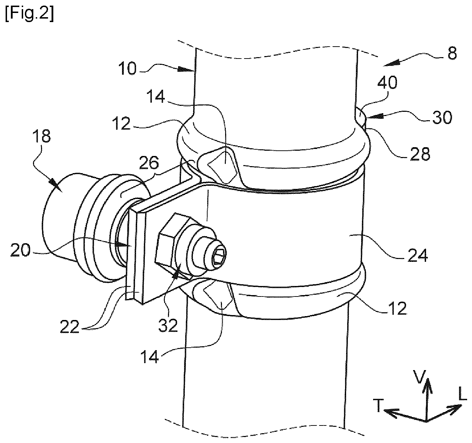

Selon un premier mode de réalisation de l'élément de suspension 8 illustré aux figures 1 et 2, le moyen d'articulation 30 de la bague de maintien 20 comporte un axe cylindrique 40 maintenu par chaque deuxième tronçon d'extrémité 28 des brides 22, chaque deuxième tronçon d'extrémité 28 englobe l'axe cylindrique 40 selon sa circonférence. L'axe cylindrique 40 constitue une charnière pour l'articulation des brides 22 l'une par rapport à l'autre.

Le dispositif de blocage en rotation de la bague de maintien 20 par rapport au corps d'amortisseur 10 est constitué par l'axe cylindrique 40 dont le diamètre est suffisamment important pour constituer une portion en saillie orientée vers l'axe principal X de la bague de maintien 20.

Le dispositif de blocage en rotation du corps d'amortisseur 10 est une rainure de blocage 16 formée sur une surface externe du corps d'amortisseur 10 et qui s'étend selon une direction parallèle à l'axe principal X.

Chaque rainure de blocage 16 est par exemple réalisée par une opération de déformation comme par exemple par rainurage, par moletage ou bien par enlèvement.

Plus particulièrement, en position montée de la bague de maintien 20 sur le corps d'amortisseur 10, l'axe cylindrique 40 du moyen d'articulation 30 de la bague de maintien 20 est reçu dans la rainure de blocage 16 du corps d'amortisseur 10.

Selon un exemple de réalisation de l'invention tel que représenté aux figures 1 à 4, chaque rainure de blocage 16 formée sur le corps d'amortisseur 10 est associé à deux encoches de blocage 14 chacune formée sur une surface externe d'un bourrelet 12 du corps d'amortisseur 10. L'encoche de blocage 14 est alignée avec la rainure de blocage 16 sur le corps d'amortisseur 10.

Selon une variante non représentée du premier mode de réalisation de l'élément de suspension 8, le dispositif de blocage en rotation du corps d'amortisseur 10 est un ensemble d'encoches de blocage 14 formées sur la surface externe de chacun des deux bourrelets 12 du corps d'amortisseur 10.

Plus particulièrement, en position montée de la bague de maintien 20 sur le corps d'amortisseur 10, chaque extrémité axiales de l'axe cylindrique 40 du moyen d'articulation 30 de la bague de maintien 20 est reçue dans une encoche de blocage 14 du corps d'amortisseur 10.

Selon une autre variante non représentée du premier mode de réalisation de l'élément de suspension 8, le dispositif de blocage en rotation du corps d'amortisseur 10 est la combinaison d'une rainure de blocage 16 avec un ensemble d'encoches de blocage 14 du corps d'amortisseur 10.

Plus particulièrement, en position montée de la bague de maintien 20 sur le corps d'amortisseur 10, l'axe cylindrique 40 est reçu dans la rainure de blocage 16 et chaque extrémité axiales de l'axe cylindrique 40 est reçue dans une encoche de blocage 14 du corps d'amortisseur 10.

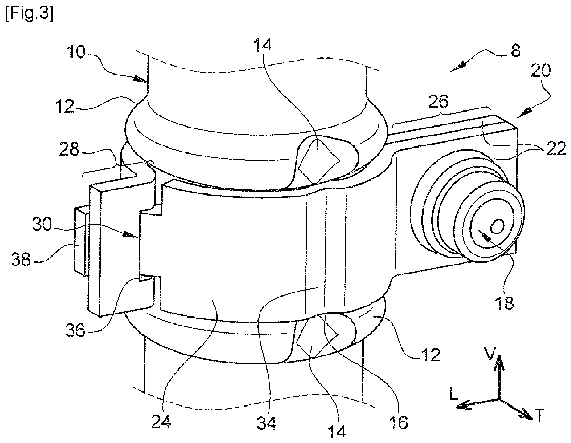

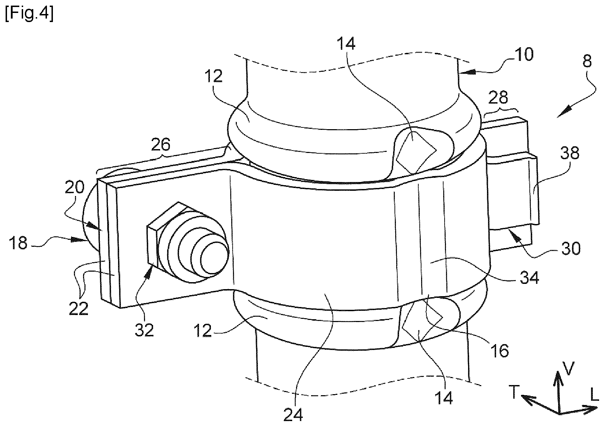

Selon un deuxième exemple de réalisation de l'élément de suspension 8 illustré aux figures 3 et 4, le moyen d'articulation 30 de la bague de maintien 20 comporte une ouverture 36 agencée sur le deuxième tronçon d'extrémité 28 d'une bride 22 qui est prévue pour recevoir une languette 38 agencée sur le deuxième tronçon d'extrémité 28 de l'autre bride 22 de la bague de maintien 20.

Le deuxième tronçon d'extrémité 28 de la bride 22 comportant l'ouverture 36 est plié vers l'extérieur de la bague de maintien 20, la zone pliée constitue la jonction entre le tronçon central 24 et le deuxième tronçon d'extrémité 28 de la bride 22. L'ouverture 36 est une fente de forme rectangulaire réalisée dans la zone pliée dont le côté le plus grand s'étend selon une direction parallèle à l'axe principale X.

Le deuxième tronçon d'extrémité 28 de la bride 22 comportant la languette 38 est aussi plié vers l'extérieur de la bague de maintien 20 de sorte qu'en position montée de la bague de maintien 20 sur le corps d'amortisseur 10, les deuxièmes tronçons d'extrémité 28 s'étendent parallèlement l'un par rapport à l'autre et peuvent être en contact tel que représenté à la figure 4. La languette 38 est de forme rectangulaire et de dimensions proportionnelles à celles de l'ouverture 36 pour assurer la réception et l'enlèvement de la languette 38 dans l'ouverture 36.

Le dispositif de blocage en rotation de la bague de maintien 20 par rapport au corps d'amortisseur 10 est constitué par une nervure 34 formée sur une surface interne d'au moins une des deux brides 22. Chaque nervure 34 s'étend selon une direction parallèle à l'axe principal X et constitue une portion en saillie orientée en direction de l'axe principal X. Les nervures 34 sont par exemple réalisées par emboutissage.

Le dispositif de blocage en rotation du corps d'amortisseur 10 est au moins une rainure de blocage 16 formée sur une surface externe du corps d'amortisseur 10 et qui s'étend selon une direction parallèle à l'axe principal X.

Plus particulièrement, en position montée de la bague de maintien 20 sur le corps d'amortisseur 10, chaque nervure 34 des brides 22 est reçue dans une rainure de blocage 16 du corps d'amortisseur 10.

Avantageusement, selon le deuxième mode de réalisation de l'élément de suspension 8, la bague de maintien 20 comporte deux nervures 34 chacune formée sur la surface interne d'une bride 22 de la bague de maintien 20 et le corps d'amortisseur 10 comporte aussi deux rainures de blocage 16 agencée en vis-à-vis des nervures 34 de la bague de maintien 20.

Le procédé de montage de l'élément de suspension 8 selon l'invention comporte les étapes suivantes :
- mise en place du moyen d'articulation 30 des deuxièmes tronçons d'extrémité 28 des brides 22 de la bague de maintien 20 l'un par rapport à l'autre,
- montage et positionnement de la bague de maintien 20 articulée sur le corps d'amortisseur 10 de sorte que chaque dispositif de blocage en rotation de la bague de maintien 20 est reçu dans un dispositif de blocage complémentaire du corps d'amortisseur 10, et
- fixation des premiers tronçons d'extrémité 26 des brides 22 l'un par rapport à l'autre de manière à serrer solidairement la bague de maintien 20 sur le corps d'amortisseur 10, et
- couplage du moyen de fixation 32 de la bague de maintien 20 à la liaison rotule 18 de la biellette de barre stabilisatrice.

La bague de maintien 20 d'une biellette de barre stabilisatrice à un corps d'amortisseur 10 selon l'invention permet de préserver l'unicité de la référence du dispositif de maintien pour les amortisseurs droit et gauche du véhicule.

De plus, contrairement à un assemblage par soudage du dispositif de maintien sur le corps d'amortisseur 10, la bague de maintien 20 démontable du corps d'amortisseur 10 ne requiert pas de contraintes dimensionnelles entre la bague de maintien 20 et le corps d'amortisseur 10. Par conséquent, le corps d'amortisseur 10 peut être redimensionné en minimisant son épaisseur. Une telle modification dimensionnelle du corps d'amortisseur 10 implique un gain de masse important sur l'ensemble de l'élément de suspension 8.

La bague de maintien 20 selon l'invention assure également un assemblage solidaire de la biellette de barre stabilisatrice avec le corps d'amortisseur 10 grâce à un dispositif de blocage en rotation de la bague de maintien 20. La solidarité de l'assemblage peut aussi être renforcée par un dispositif de retenue axiale de la bague de maintien 20 par rapport au corps d'amortisseur 10.

### LEGENDE

- 8 :: élément de suspension
- 10 :: corps d'amortisseur
- 12 :: bourrelet
- 14 :: encoche de blocage
- 16 :: rainure de blocage
- 18 :: liaison rotule
- 20 :: bague de maintien
- 22 :: bride
- 24 :: tronçon central
- 26 :: premier tronçon d'extrémité
- 28 :: deuxième tronçon d'extrémité
- 30 :: moyen d'articulation
- 32 :: moyen de fixation
- 34 :: nervure
- 36 :: ouverture
- 38 :: languette
- 40 :: axe cylindrique

## Revendications

1. Elément de suspension (8) d'un véhicule automobile, l'élément de suspension comportant un corps d'amortisseur (10) et une bague de maintien (20) d'une biellette de barre stabilisatrice au corps d'amortisseur (10) d'un élément de suspension (8) d'un véhicule automobile, la bague de maintien (20) s'étendant selon un axe principal (X) et comprenant :
- deux brides (22) prévues pour être en appui contre le corps d'amortisseur (10), chaque bride (22) comporte un premier et un deuxième tronçons d'extrémité (26, 28) ;
- un moyen de fixation (32) des deux brides (22) de la bague de maintien (20) l'une par rapport à l'autre à leur premier tronçon d'extrémité (26) **caractérisé en ce que** la bague de maintien comporte un moyen d'articulation (30) des deux brides (22) l'une par rapport à l'autre à leur deuxième tronçon d'extrémité (28), et
- au moins un dispositif de blocage en rotation (34, 40) de la bague de maintien (20) par rapport au corps d'amortisseur (10) le corps d'amortisseur (10) comporte un dispositif de blocage en rotation (14, 16) complémentaire du dispositif de blocage en rotation de la bague de maintien (20) par rapport au corps d'amortisseur (10).

2. Elément de suspension (8) selon la revendication 1, **caractérisé en ce qu'**au moins l'une des deux brides (22) de la bague de maintien (20) comporte une nervure (34) de blocage en rotation de la bague de maintien (20) par rapport au corps d'amortisseur (10) formée sur une surface interne de la bride (22), et **en ce que** la nervure (34) est ape à être reçue dans le corps d'amortisseur (10).

3. Elément de suspension (8) selon la revendication 2, **caractérisé en ce qu'**en position montée de la bague de maintien (20) sur le corps d'amortisseur (10), la nervure (34) de la bride (22) de la bague de maintien (20) est reçue dans une rainure de blocage (16) du corps d'amortisseur (10).

4. Elément de suspension (8) selon l'une quelconque des revendications précédentes, **caractérisé en ce que** le moyen d'articulation (30) de la bague de maintien (20) constitue un dispositif de blocage en rotation de la bague de maintien (20) par rapport à la portion cylindrique de l'amortisseur.

5. Elément de suspension (8) selon l'une quelconque des revendications précédentes, **caractérisé en ce que** le moyen d'articulation (30) de la bague de maintien (20) comporte un axe cylindrique (40) maintenu par chaque deuxième tronçon d'extrémité (28) des brides (22) de la bague de maintien (20).

6. Elément de suspension (8) selon la revendication 5, **caractérisé en ce qu'**en position montée de la bague de maintien (20) sur le corps d'amortisseur (10), l'axe cylindrique (40) du moyen d'articulation (30) de la bague de maintien (20) est reçu dans une rainure de blocage (16) formée sur une surface externe du corps d'amortisseur (10).

7. Elément de suspension (8) selon l'une quelconque des revendications 1 à 4 **caractérisé en ce que** le moyen d'articulation (30) de la bague de maintien (20) comporte une ouverture (36) agencée sur le deuxième tronçon d'extrémité (28) d'une bride (22) qui est prévue pour recevoir le deuxième tronçon d'extrémité (28) de l'autre bride (22) de la bague de maintien (20).

8. Elément de suspension (8) selon l'une quelconque des revendications 1 à 7, **caractérisé en ce que** le corps d'amortisseur (10) comporte un dispositif de retenue axiale de la bague de maintien (20) par rapport au corps d'amortisseur (10).

9. Elément de suspension (8) selon la revendication 8, **caractérisé :**
- **en ce que** le corps d'amortisseur (10) comporte deux bourrelets (12) parallèles formés sur une surface externe du corps d'amortisseur (10) et s'étendant selon une direction perpendiculaire à l'axe principal (X),
- et **en ce qu'**en position montée de la bague de maintien (20) sur le corps d'amortisseur (10), la bague de maintien (20) est retenue axialement entre les deux bourrelets (12) du corps d'amortisseur (10).

## Patentansprüche

1. Aufhängungselement (8) eines Kraftfahrzeugs, wobei das Aufhängungselement einen Stoßdämpferkörper (10) und einen Haltering (20) zum Halten einer Koppelstange am Stoßdämpferkörper (10) eines Aufhängungselements (8) eines Kraftfahrzeugs aufweist, wobei sich der Haltering (20) entlang einer Hauptachse (X) erstreckt und umfasst:
- zwei Schellen (22), die dafür vorgesehen sind, am Stoßdämpferkörper (10) anzuliegen, wobei jede Schelle (22) einen ersten und einen zweiten Endabschnitt (26, 28) aufweist;
- ein Mittel zur Befestigung (32) der zwei Schellen (22) des Halteringes (20) aneinander an ihrem ersten Endabschnitt (26), **dadurch gekennzeichnet, dass** der Haltering ein Mittel zum Anlenken (30) der zwei Schellen (22) aneinander an ihrem zweiten Endabschnitt (28) aufweist, und
- mindestens eine Vorrichtung zur Drehblockierung (34, 40) des Halteringes (20) bezüglich des Stoßdämpferkörpers (10),
- wobei der Stoßdämpferkörper (10) eine Vorrichtung zur Drehblockierung (14, 16) aufweist, die zu der Vorrichtung zur Drehblockierung des Halteringes (20) bezüglich des Stoßdämpferkörpers (10) komplementär ist.

2. Aufhängungselement (8) nach Anspruch 1, **dadurch gekennzeichnet, dass** mindestens eine der zwei Schellen (22) des Halteringes (20) eine Rippe (34) zur Drehblockierung des Halteringes (20) bezüglich des Stoßdämpferkörpers (10) aufweist, die auf einer Innenfläche der Schelle (22) ausgebildet ist, und dadurch, dass die Rippe (34) im Stoßdämpferkörper (10) aufgenommen werden kann.

3. Aufhängungselement (8) nach Anspruch 2, **dadurch gekennzeichnet, dass** in der am Stoßdämpferkörper (10) angebrachten Position des Halteringes (20) die Rippe (34) der Schelle (22) des Halteringes (20) in einer Blockiernut (16) des Stoßdämpferkörpers (10) aufgenommen ist.

4. Aufhängungselement (8) nach einem der vorhergehenden Ansprüche, **dadurch gekennzeichnet, dass** das Anlenkmittel (30) des Halteringes (20) eine Vorrichtung zur Drehblockierung des Halteringes (20) bezüglich des zylindrischen Abschnitts des Stoßdämpfers darstellt.

5. Aufhängungselement (8) nach einem der vorhergehenden Ansprüche, **dadurch gekennzeichnet, dass** das Anlenkmittel (30) des Halteringes (20) eine zylindrische Achse (40) aufweist, die von jedem zweiten Endabschnitt (28) der Schellen (22) des Halterings (20) gehalten wird.

6. Aufhängungselement (8) nach Anspruch 5, **dadurch gekennzeichnet, dass** in der am Stoßdämpferkörper (10) angebrachten Position des Halteringes (20) die zylindrische Achse (40) des Anlenkmittels (30) des Halteringes (20) in einer Blockiernut (16) aufgenommen ist, die auf einer Außenfläche des Stoßdämpferkörpers (10) ausgebildet ist.

7. Aufhängungselement (8) nach einem der Ansprüche 1 bis 4, **dadurch gekennzeichnet, dass** das Anlenkmittel (30) des Halteringes (20) eine am zweiten Endabschnitt (28) einer Schelle (22) angeordnete Öffnung (36) aufweist, die dafür vorgesehen ist, den zweiten Endabschnitt (28) der anderen Schelle (22) des Halteringes (20) aufzunehmen.

8. Aufhängungselement (8) nach einem der Ansprüche 1 bis 7, **dadurch gekennzeichnet, dass** der Stoßdämpferkörper (10) eine Vorrichtung zum axialen Halten des Halteringes (20) bezüglich des Stoßdämpferkörpers (10) aufweist.

9. Aufhängungselement (8) nach Anspruch 8, **gekennzeichnet:**
- **dadurch, dass** der Stoßdämpferkörper (10) zwei parallele Wülste (12) aufweist, die auf einer Außenfläche des Stoßdämpferkörpers (10) ausgebildet sind und sich in einer zur Hauptachse (X) senkrechten Richtung erstrecken,
- und dadurch, dass in der am Stoßdämpferkörper (10) angebrachten Position des Halteringes (20) der Haltering (20) axial zwischen den zwei Wülsten (12) des Stoßdämpferkörpers (10) gehalten wird.

## Claims

1. Suspension element (8) of a motor vehicle, the suspension element comprising a damper body (10) and a holding ring (20) for holding a stabilizer bar link on the damper body (10) of a suspension element (8) of a motor vehicle, the holding ring (20) extending along a main axis (X) and comprising:
- two flanges (22) intended to bear against the damper body (10), each flange (22) comprising first and second end portions (26, 28);
- a means (32) for fastening the two flanges (22) of the holding ring (20) with respect to each other at their first end portion (26), **characterized in that** the holding ring comprises a means (30) for articulating the two flanges (22) with respect to each other at their second end portion (28), and
- at least one device (34, 40) for preventing rotation of the holding ring (20) with respect to the damper body (10),
- the damper body (10) comprising a rotation-preventing device (14, 16) complementary to the device for preventing rotation of the holding ring (20) with respect to the damper body (10).

2. Suspension element (8) according to Claim 1, **characterized in that** at least one of the two flanges (22) of the holding ring (20) comprises a rib (34) for preventing the holding ring (20) from rotating with respect to the damper body (10), which rib (34) is formed on an inner surface of the flange (22), and **in that** the rib (34) is able to be received in the damper body (10).

3. Suspension element (8) according to Claim 2, **characterized in that**, in the position in which the holding ring (20) is mounted on the damper body (10), the rib (34) of the flange (22) of the holding ring (20) is received in a locking groove (16) of the damper body (10) .

4. Suspension element (8) according to any one of the preceding claims, **characterized in that** the articulation means (30) of the holding ring (20) constitutes a device for preventing rotation of the holding ring (20) with respect to the cylindrical portion of the damper.

5. Suspension element (8) according to any one of the preceding claims, **characterized in that** the articulation means (30) of the retaining ring (20) comprises a cylindrical pin (40) held by each second end portion (28) of the flanges (22) of the holding ring (20).

6. Suspension element (8) according to Claim 5, **characterized in that**, in the position in which the holding ring (20) is mounted on the damper body (10), the cylindrical pin (40) of the articulation means (30) of the holding ring (20) is received in a locking groove (16) formed on an outer surface of the damper body (10).

7. Suspension element (8) according to any one of Claims 1 to 4, **characterized in that** the articulation means (30) of the holding ring (20) comprises an opening (36) arranged in the second end portion (28) of one flange (22) and intended to receive the second end portion (28) of the other flange (22) of the holding ring (20).

8. Suspension element (8) according to any one of Claims 1 to 7, **characterized in that** the damper body (10) comprises a device for axially retaining the holding ring (20) with respect to the damper body (10).

9. Suspension element (8) according to Claim 8, **characterized:**
- **in that** the damper body (10) comprises two parallel beads (12) formed on an outer surface of the damper body (10) and extending in a direction perpendicular to the main axis (X),
- **in that**, in the position in which the holding ring (20) is mounted on the damper body (10), the holding ring (20) is retained axially between the two beads (12) of the damper body (10).
